(19) Europäisches Patentamt
European Patent Office
Office européen des brevets

(11) Veröffentlichungsnummer: **0 010 612**
**B1**

# (12) EUROPÄISCHE PATENTSCHRIFT

(45) Veröffentlichungstag der Patentschrift: **16.09.81**

(51) Int. Cl.³: **C 07 F 9/65,** A 01 N 57/32

(21) Anmeldenummer: **79103633.8**

(22) Anmeldetag: **25.09.79**

(54) **N-iso-Propyl-S-(1,6-dihydro-6-(thi)oxo-pyridazin(1)-yl-methyl)-thiolphosphorsäure-esteramide, Verfahren zu ihrer Herstellung und ihre Verwendung als Schädlingsbekämpfungsmittel.**

(30) Priorität: **07.10.78 DE 2843823**

(43) Veröffentlichungstag der Anmeldung: **14.05.80 Patentblatt 80/10**

(45) Bekanntmachung des Hinweises auf die Patenterteilung: **16.09.81 Patentblatt 81/37**

(84) Benannte Vertragsstaaten: **AT BE CH DE FR GB IT NL SE**

(56) Entgegenhaltungen:
**DE-A-2 006 020**
**DE-A-2 316 821**
**DE-A1-2 348 736**
**DE-A1-2 603 052**
**DE-C-1 106 766**

(73) Patentinhaber: **BAYER AG, Zentralbereich Patente, Marken und Lizenzen, D-5090 Leverkusen 1, Bayerwerk (DE)**

(72) Erfinder: **Maurer, Fritz, Dr., Roeberstrasse 8, D-5600 Wuppertal 1 (DE)**
Erfinder: **Homeyer, Bernhard, Dr., Obere Strasse 28, D-5090 Leverkusen 3 (DE)**
Erfinder: **Hammann, Ingeborg, Dr., Belfortstrasse 9, D-5000 Köln (DE)**

EP 0 010 612 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# N-iso-Propyl-S-(1,6-dihydro-6-(thi)oxo-pyridazin(1)yl-methyl)-thiolphosphorsäure-esteramide, Verfahren zu ihrer Herstellung und ihre Verwendung als Schädlingsbekämpfungsmittel

Die Erfindung betrifft neue N-iso-Propyl-S-(1,6-dihydro-6-(thi)oxo-pyridazin(1)yl-methyl)-thiolphosphorsäure-esteramide, ein Verfahren zu ihrer Herstellung sowie ihre Verwendung als Schädlingsbekämpfungsmittel, insbesondere als Insektizide, Akarizide und Nematizide.

Es ist bekannt, dass bestimmte S-(1,6-Dihydro-6-(thi)oxo-pyridazin(1)yl-methyl)-(thiono)thiolphosphorsäure-esteramide wie z.B. N-Allyl-O-äthyl-S-(1,6-dihydro-3-methyl-6-oxo-pyridazin(1)yl-methyl)-thionothiol-phosphorsäure-esteramid, N,N-Dimethyl-O-äthyl-S-(1,6-dihydro-3-methyl-6-oxo-pyridazin(1)yl-methyl)-thiolphosphorsäure-esteramid und N-iso-Propyl-O-n-propyl-S-(1,6-dihydro-3-methyl-6-thioxo-pyridazin(1)yl - methyl) - thionothiol - phosphorsäure - esteramid, insektizide, akarizide und nematizide Eigenschaften aufweisen (vgl. DE-OS 2 348 736 und 2 603 052). Die Wirkung dieser Verbindung ist jedoch, insbesondere bei niedrigen Wirkstoffkonzentrationen und Aufwandmengen, nicht immer zufriedenstellend.

Es wurden nun neue N-iso-Propyl-S-(1,6-dihydro-6-(thi)oxo-pyridazin(1)yl-methyl)-thiolphosphorsäure-esteramide der Formel

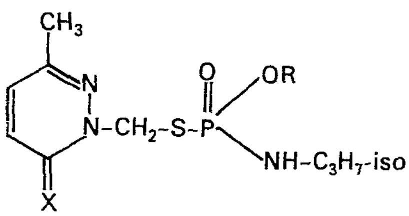

(I)

gefunden, in welcher
R für Alkyl mit 1 bis 6 Kohlenstoffatomen und
X für Sauerstoff oder Schwefel steht.

Man erhält Verbindungen der Formel (I), wenn man 1,6-Dihydro-1-chloromethyl-3-methyl-6-(thi)oxo-pyridazine der Formel

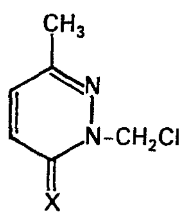

(II)

in welcher X die oben angegebene Bedeutung hat, mit Salzen von N-iso-Propyl-thiolphosphorsäure-esteramiden der Formel

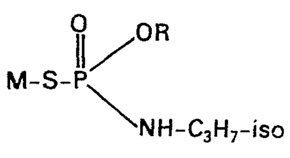

(III)

in welcher R die oben angegebene Bedeutung hat und M für ein Alkalimetall-, Erdalkalimetall- oder Ammoniumäquivalent steht,

gegebenenfalls unter Verwendung eines Verdünnungsmittels umsetzt.

Die neuen Verbindungen (I) zeichnen sich durch hohe Wirksamkeit als Schädlingsbekämpfungsmittel, insbesondere durch hervorragende insektizide, akarizide und nematizide Eigenschaften aus.

Überraschenderweise zeigen die erfindungsgemässen N-iso-Propyl-S-(1,6-dihydro-6-(thi)-oxo-pyridazin(1)yl-methyl)-thiolphosphorsäure-esteramide (I) erheblich höhere insektizide, akarizide und nematizide Wirkung als aus dem Stand der Technik bekannte Verbindungen analoger Konstitution und gleicher Wirkungsrichtung.

Die Erfindung betrifft insbesondere Verbindungen der Formel (I), in welcher
R für geradkettiges Alkyl mit 1 bis 3 Kohlenstoffatomen und
X für Sauerstoff oder Schwefel steht.

Verwendet man beispielsweise 1,6-Dihydro-1-chlormethyl-3-methyl-6-thioxo-pyridazin und das Natriumsalz von N-iso-Propyl-O-methyl-thiolphosphorsäure-esteramid als Ausgangsstoffe, so kann die Reaktion dieser Verbindungen durch folgendes Formelschema skizziert werden:

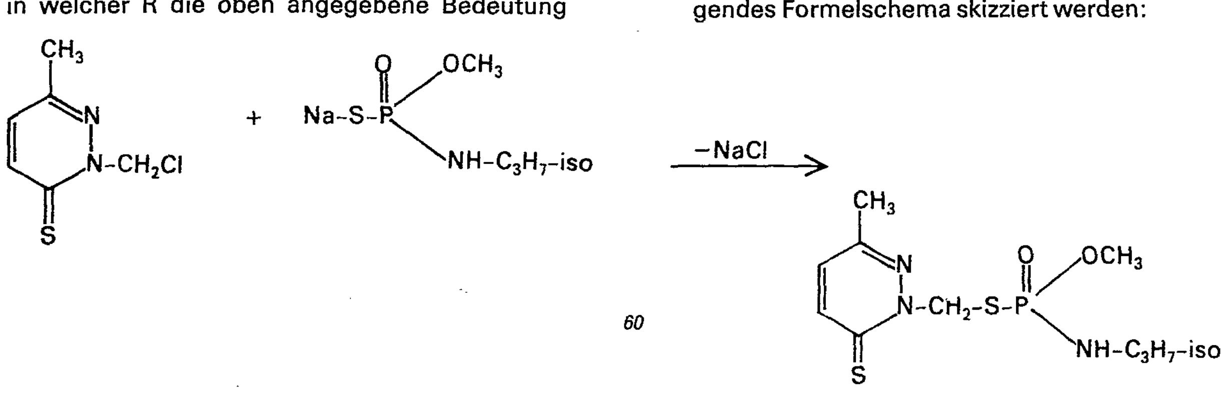

Die als Ausgangsstoffe zu verwendenden 1,6-Dihydro-1-chloromethyl-3-methyl-6-(thi)oxo-pyridazine sind durch die Formel (II), in welcher X für Sauerstoff oder Schwefel steht, definiert.

Die Verbindungen der Formel (II) sind bereits bekannt (vgl. DE-OS 2 348 736 und 2 603 052).

Als Beispiele seien genannt:
1,6-Dihydro-1-chloromethyl-3-methyl-6-oxo-pyridazin und
1,6-Dihydro-1-chloromethyl-3-methyl-6-thioxo-pyridazin.

Die als weitere Ausgangsstoffe einzusetzenden Salze von N-iso-Propyl-thiolphosphorsäure-esteramiden sind durch die Formel (III) definiert. Vorzugsweise stehen darin
R für geradkettiges Alkyl mit 1 bis 3 Kohlenstoffatomen und
M für Natrium oder Kalium.

Als Beispiele seien genannt:
Natriumsalz und Kaliumsalz von O-Methyl-N-iso-propyl-thiolphosphorsäure-esteramid,
Natriumsalz und Kaliumsalz von O-Äthyl-N-iso-propyl-thiolphosphorsäure-esteramid sowie
Natriumsalz und Kaliumsalz von O-n-Propyl-N-iso-propyl-thiolphosphorsäure-esteramid.

Die Ausgangsverbindungen der Formel (III) sind neu. Man erhält diese Verbindungen (III), wenn man N-iso-Propyl-thionophosphorsäure-esterchloride der Formel

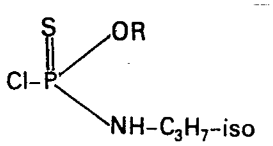
(IV)

in welcher R die oben angegebene Bedeutung hat (vorzugsweise geradkettiges Alkyl mit 1 bis 3 Kohlenstoffatomen) mit wenigstens zwei Äquivalenten einer Hydroxyverbindung der Formel

M–OH (V)

in welcher M die oben angegebene Bedeutung hat (vorzugsweise Natrium oder Kalium), gegebenenfalls unter Verwendung von Verdünnungsmitteln wie z.B. Wasser und Methanol, bei Temperaturen zwischen 0 und 100 °C, vorzugsweise bei 20 bis 80 °C, umsetzt. Die Reaktionsprodukte erhält man dann beispielsweise durch Extraktion mit Toluol und Eindampfen der wässrigen Phase im Vakuum.

Die Vorprodukte der Formel (IV) sind bekannt oder können analog bekannten Verfahren hergestellt werden (vgl. DE-OS 2 348 736).

Als Beispiele hierfür seien genannt:
O-Methyl-, O-Äthyl- und O-n-Propyl-N-iso-propyl-thionophosphorsäure-esterchlorid.

Als Beispiele für die Hydroxyverbindungen der Formel (V) seien Natriumhydroxid und Kaliumhydroxid genannt.

Das Verfahren zur Herstellung der erfindungsgemässen N-iso-Propyl-S-(1,6-dihydro-6-(thi)-oxo-pyridazin(1)yl-methyl)-thiolphosphorsäure-esteramide wird bevorzugt unter Verwendung geeigneter Lösungs- oder Verdünnungsmittel durchgeführt. Als solche kommen praktisch alle inerten organischen Solventien in Frage. Hierzu gehören insbesondere aliphatische und aromatische, gegebenenfalls chlorierte Kohlenwasserstoffe, wie Benzin, Benzol, Toluol, Xylol, Methylenchlorid, Chloroform, Tetrachlorkohlenstoff, Chlorbenzol und o-Dichlorbenzol, Äther wie Diäthyl- und Dibutyläther, Tetrahydrofuran und Dioxan, Ketone wie Aceton, Methyläthyl-, Methylisopropyl und Methylisobutylketon sowie Nitrile wie Acetonitril und Propionitril.

Die Reaktionstemperatur kann innerhalb eines grösseren Bereichs variiert werden. Im allgemeinen arbeitet man zwischen 0 und 100 °C, vorzugsweise bei 20 bis 80 °C.

Das erfindungsgemässe Verfahren wird im allgemeinen bei Normaldruck durchgeführt.

Auf 1 Mol der 1,6-Dihydro-1-chloromethyl-3-methyl-6-(thi)oxo-pyridazine (II) setzt man im allgemeinen zwischen 1,0 und 1,2 Mol, vorzugsweise zwischen 1,05 und 1,15 Mol der Salze von N-iso-Propyl-thiolphosphorsäure-esteramiden (III) ein.

Die Umsetzung wird im allgemeinen in einem der oben angegebenen Verdünnungsmittel durchgeführt und das Reaktionsgemisch wird mehrere Stunden bei der erforderlichen Temperatur gerührt. Danach wird mit einem organischen Lösungsmittel wie z.B. Toluol verdünnt und die organische Phase wie üblich durch Waschen, Trocknen und Abdestillieren des Lösungsmittels aufgearbeitet. Zur Charakterisierung der Produkte, welche im allgemeinen in öliger Form anfallen dient der Brechungsindex.

Die neuen N-iso-Propyl-S-(1,6-dihydro-6-(thi)-oxo-pyridazin(1)yl-methyl)-thiolphosphorsäure-esteramide (I) zeichnen sich, wie bereits erwähnt, durch hervorragende insektizide, akarizide und nematizide Wirksamkeit aus. Sie besitzen bei geringer Phytotoxizität eine gute Wirkung gegen saugende und fressende Insekten, wie auch gegen Spinnmilben und Nematoden.

Daher können die erfindungsgemässen Verbindungen (I) mit Erfolg im Pflanzenschutz als Schädlingsbekämpfungsmittel eingesetzt werden.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam.

Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus Oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole wie Butanol oder Glycol sowie deren

Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Anwendung der erfindungsgemässen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

**Beispiel A**

Grenzkonzentrations-Test/Nematoden

| | |
|---|---|
| Testnematode: | Meloidogyne incognita |
| Lösungsmittel: | 3 Gewichtsteile Aceton |
| Emulgator: | 1 Gewichtsteil Alkylarylpolyglykoläther |

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden.

Nach vier Wochen werden die Salatwurzeln auf Nematodenbefall (Wurzelgallen) untersucht und der Wirkungsgrad des Wirkstoffs in % bestimmt.

Bei diesem Test zeigen z.B. die folgenden Verbindungen der Herstellungsbeispiele 1, 2, 3 und 4 eine gute Wirksamkeit.

**Beispiel B**

Phaedon-Larven-Test

| | |
|---|---|
| Lösungsmittel: | 3 Gewichtsteile Aceton |
| Emulgator: | 1 Gewichtsteil Alkylarylpolyglykoläther |

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt.

Bei diesem Test zeigen z.B. die folgenden Verbindungen der Herstellungsbeispiele 1, 2, 3 und 4 eine gute Wirksamkeit.

**Beispiel C**

Tetranychus-Test (resistent)

| | |
|---|---|
| Lösungsmittel: | 3 Gewichtsteile Aceton |
| Emulgator: | 1 Gewichtsteil Alkylarylpolyglykoläther |

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt.

Bei diesem Test zeigen z.B. die folgenden Verbindungen der Herstellungsbeispiele 1, 2, 3 und 4 eine gute Wirksamkeit.

## Herstellungsbeispiele

**Beispiel 1:**

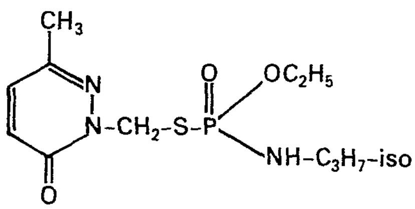

(1)

Eine Mischung von 15,8 g (0,1 Mol) 1,6-Dihydro-1-chloromethyl-3-methyl-6-oxopyridazin und 24,3 g (0,11 Mol) des Kaliumsalzes des O-Äthyl-N-iso-propyl-thiolphosphorsäure-esteramids wird in 200 ml Acetonitril 13 Stunden auf 50 °C erhitzt. Dann wird das Reaktionsgemisch auf 20 °C abgekühlt und in 500 ml Toluol gegossen. Die Toluollösung wird mit 50 ml gesättigter Natriumhydrogencarbonatlösung gewaschen, über Natriumsulfat getrocknet und dann eingedampft. Man erhält 25 g (82% der Theorie) O-Äthyl-N-isopropyl-S-(1,6-dihydro-3-methyl-6-oxo-pyridazin(1)-yl-methyl)-thiolphosphorsäure-esteramid als gelbes Öl mit dem Brechnungsindex $n_D^{22}$: 1,5396.

Analog wurden die folgenden aufgeführten Verbindungen hergestellt:

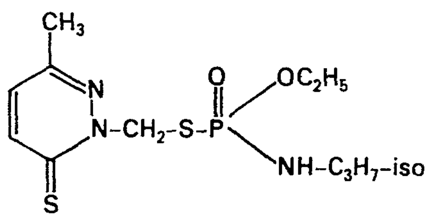

Ausbeute:
74 % der Theorie;
Brechungsindex:
$n_D^{21}$: 1,6031

(2)

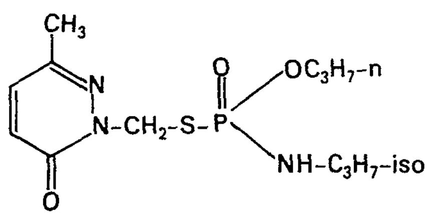

Ausbeute:
82 % der Theorie;
Brechungsindex:
$n_D^{22}$: 1,5280

(3)

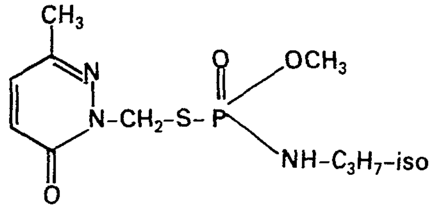

Ausbeute:
89 % der Theorie;
Brechungsindex:
$n_D^{22}$: 1,5495

(4)

Die als Ausgangsmaterialien einzusetzenden Alkalisalze der Thiolphosphorsäure-esteramide können z.B. wie folgt hergestellt werden:

**Beispiel a:**

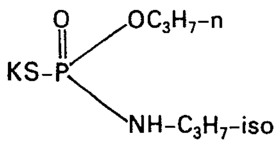

(5)

Ein Gemisch aus 150 ml Wasser, 100 ml Methanol, 61,6 g (1,1 Mol) Kaliumhydroxid und 107,8 g (0,5 Mol) Thionophosphorsäure-O-propylester-N-iso-pyropylamidchlorid wird 1 Stunde unter Rückfluss gekocht und dann auf Raumtemperatur abgekühlt. Man schüttelt die Lösung mit 200 ml Toluol, trennt die wässrige Phase ab und dampft sie im Vakuum zur Trockene ein. Der Rückstand wird mit Aceton verrieben, man filtriert vom Ungelösten und destilliert das Lösungsmittel im Vakuum ab. Zurück bleiben 59 g (53% der Theorie) Kaliumsalz des O-n-Propyl-N-iso-propyl-thiolphosphorsäure-esteramids mit dem Schmelzpunkt 144 °C.

Analog können hergestellt werden:

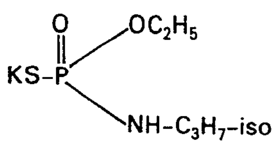

(6)

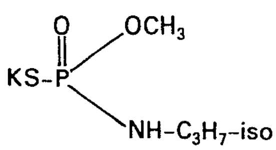

(7)

**Patentansprüche**

1. N-iso-Propyl-S-(1,6-dihydro-6-(thi)oxo-pyridazin(1)yl-methyl)-thiolphosphorsäure-esteramide der Formel

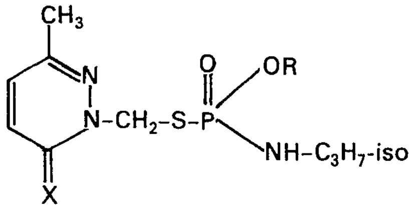

(I)

in welcher
R für Alkyl mit 1 bis 6 Kohlenstoffatomen und
X für Sauerstoff oder Schwefel steht.

2. Verfahren zur Herstellung von N-iso-Propyl-S-(1,6-dihydro-6-(thi)oxo-pyridazin(1)yl-methyl)-thiolphosphorsäure-esteramide der Formel

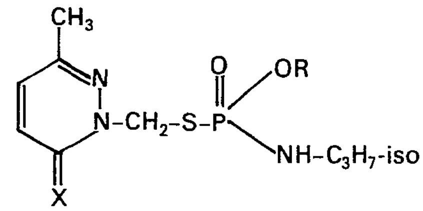

(I)

in welcher
R für Alkyl mit 1 bis 6 Kohlenstoffatomen und
X für Sauerstoff oder Schwefel steht,
dadurch gekennzeichnet, dass man 1,6-Dihydro-1-chloromethyl-3-methyl-6-(thi)oxo-pyridazine der Formel

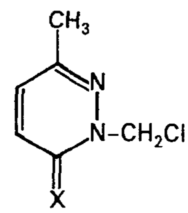

(II)

in welcher X die oben angegebene Bedeutung hat, mit Salzen von N-iso-Propyl-thiolphosphorsäure-esteramiden der Formel

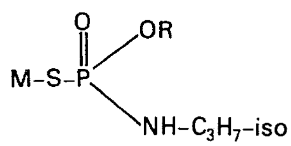

(III)

in welcher R die oben angegebene Bedeutung hat und M für ein Alkalimetall-, Erdalkalimetall- oder Ammoniumäquivalent steht,
gegebenenfalls unter Verwendung eines Verdünnungsmittels umsetzt.

3. Insektizide, akarizide oder nematozide Mittel, gekennzeichnet durch einen Gehalt an Verbindungen der Formel I.

4. Verwendung von Verbindungen gemäss Formel I zur Bekämpfung von Schädlingen.

5. Verfahren zur Herstellung von Schädlingsbekämpfungsmitteln, dadurch gekennzeichnet, dass man Verbindungen gemäss Formel I mit Streckmitteln und/oder oberflächenaktiven Mitteln mischt.

**Claims**

1. N-iso-Propyl-S-(1,6-dihydro-6-(thi)oxo-pyridazin-1-yl-methyl)-thiolphosphoric acid esteramides of the formula

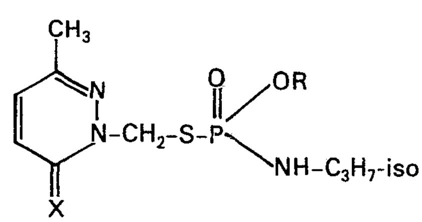

(I)

in which
R represents alkyl with 1 to 6 carbon atoms and
X represents oxygen or sulphur.

2. Process for the preparation of N-iso-propyl-S-(1,6-dihydro-6-(thi)oxo-pyridazin-1-yl-methyl)-thiolphosphoric acid ester-amides of the formula

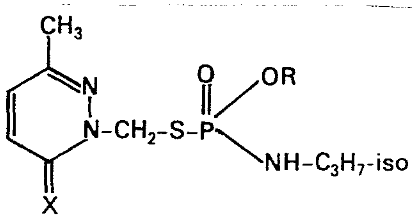
(I)

in which
R represents alkyl with 1 to 6 carbon atoms and
X represents oxygen or sulphur,
characterised in that 1,6-dihydro-1-chloromethyl-3-methyl-6-(thi)oxo-pyridazines of the formula

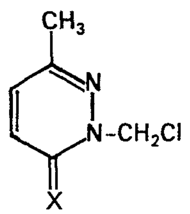
(II)

in which X has the meaning indicated above, are reacted with salts of N-iso-propyl-thiolphosphoric acid ester-amides of the formula

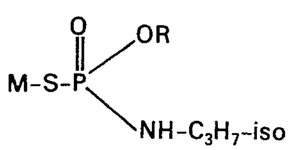
(III)

in which R has the meaning indicated above and M represents one equivalent of an alkali metal or alkaline earth metal or one ammonium equivalent,
if appropriate using a diluent.

3. Insecticidal, acaricidal or nematocidal agents, characterised in that they contain compounds according to formula I.

4. Use of compounds according to formula I for combating pests.

5. Process for the preparation of agents for combating pests, characterised in that compounds according to formula I are mixed with extenders and/or surface-active agents.

**Revendications**

1. Esteramides d'acide N-isopropyl-S-(1,6-dihydro-6-(thi)oxo-pyridazine(1)yl-méthyl)-thiolphosphorique de formule:

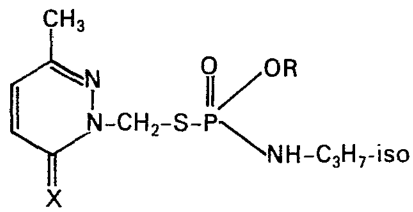
(I)

dans laquelle
R représente un alcoyle ayant 1 à 6 atomes de carbone et
X de l'oxygène ou du soufre.

2. Procédé de fabrication d'esteramides d'acide N-isopropyl-S-(1,6-dihydro-6-(thi)oxo-pyridazine(1)yl-méthyl)-thiolphosphorique de formule:

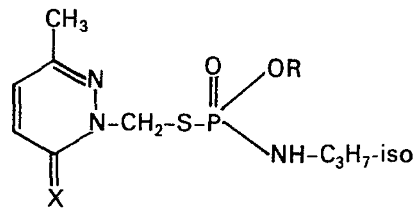
(I)

dans laquelle
R représente un alcoyle ayant 1 à 6 atomes de carbone et
X de l'oxygène ou du soufre, caractérisé en ce qu'on fait réagir des 1,6-dihydro-1-chlorométhyl-3-méthyl-6-(thi)oxo-pyridazines de formule:

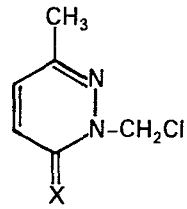
(II)

dans laquelle X a la signification indiquée plus haut, avec des sels d'esteramides d'acide N-isopropyl-thiolphosphorique de formule:

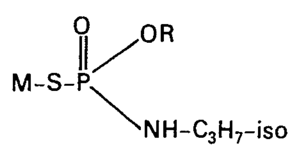
(III)

dans laquelle R a la signification indiquée plus haut et M représente un équivalent de métal alcalin, de métal alcalino-terreux ou d'ammonium,
éventuellement avec utilisation d'un diluant.

3. Agents insecticides, acaricides ou nématocides, caractérisés par une teneur en composés de formule I.

4. Utilisation de composés selon la formule I pour combattre les parasites.

5. Procédé de fabrication d'agents antiparasitaires, caractérisé en ce qu'on mélange des composés de formule I avec des diluants et/ou des agents tensio-actifs.